# EUROPEAN PATENT SPECIFICATION

(11) **EP 2 354 711 B1**
(45) Date of publication and mention of the grant of the patent: **04.07.2018**
(21) Application number: 09812726.9
(22) Date of filing: 15.09.2009
(51) Int. Cl.: F24S 20/00, F24S 10/00, F24S 40/00, F24S 10/75

(54) **COVER PANEL FOR CAPTURING SOLAR ENERGY**
DECKPLATTE ZUR ERFASSUNG VON SONNENENERGIE
PANNEAU DE COUVERTURE CAPTEUR D'ÉNERGIE SOLAIRE

(30) Priority: 15.09.2008 ES 200802617
(43) Date of publication of application: 10.08.2011
(73) Proprietor: Cupa Innovación, S.L.U., 36213 Vigo Pontevedra (ES)
(72) Inventor: FERNANDEZ FERNANDEZ, Javier, E-36213 Vigo (Pontevedra) (ES)
(74) Representative: Carvajal y Urquijo, Isabel
(86) International application number: PCT/ES2009/000454
(87) International publication number: WO 2010/029199

(56) References cited:
- GB-A- 2 402 999
- GB-A- 2 402 999
- NL-C2- 1 009 713
- US-A- 4 192 287
- US-A- 4 201 193
- US-A1- 2006 070 621
- US-A1- 2006 277 846
- US-A1- 2006 277 846

## Description

### Field of the invention

The present invention refers to a solar energy collector roofing , especially designed for roofing made of slate pieces, with the panel of which a finish and external aspect of the cover is attained coinciding with that of a traditional cover, being also adaptable all types of cover materials and finishes.

### Background of the invention

There are known solar heat absorber panels for roofing, designed as an energy saving means.

From the patent document US 2004098932 it is known a solar absorber panel for roofing which has an outer layer of tiles transparent to solar radiation and an inner layer of metal strips or another type of strips which absorbs solar radiation and transmits it to a pipe welded to each one of said strips. This system requires special transparent pieces as covering material, altering the external aspect of the roofing. Besides, the installation of this type of panels is slow, has little robustness and it is sensitive to mechanical actions.

GB 2402999 describes a solar radiation absorber panel which has a duct which ends close to the panel edge in a cylindrical terminal. Each terminal shares a common axis with the terminal of an adjacent panel, which can also include a connector, so that the panels can be coupled in an assembly. The panel can also include a transparent or translucent layer, in the form of glass tiles or slates. As in the previous case, the panel requires special transparent pieces as covering material and skilled labor is required for its mounting. It is also difficult to seal the connections between panels and it is also sensitive to mechanical actions.

US 4 192 287 A shows a solar energy collector according to the preamble of claim 1.

### Description of the invention

The object of the present invention is to eliminate the aforementioned problems, through a panel with simple constitution, with which a high performance is attained and which enables to make roofings whose external aspect is not altered with respect to a traditional roofing, with the same closing or covering pieces.

The panel of the invention does not require special pieces for the roofing, but it allows the use of traditional pieces, especially slate pieces.

Due to its constitution, the panel of the invention enables a fast installation and without risks of leaks from the heater fluid.

According to the invention, the roofing panel comprises a metal sheet, with good thermal transmission coefficient, with a series of parallel metallic ducts being fixed to one of their surfaces.

The aforementioned tubes are consecutively connected by their adjacent mouths, determining a circuit which is open by the free mouth of the end ducts, being useful for its connection to the circuit of another adjacent panel or else to ducts of an external circuit or installation. According to the invention, the metal sheet has, in perpendicular direction to the metallic ducts a stepped profile which coincides with the one formed by the covering pieces. In this way, it is attained a perfect coupling between the slate, and the solar energy collector panel. According to the invention, the slates and the metal sheet there is a thermal conductive material which guarantees an optimum contact between said pieces and sheet, material which could serve as fixing means of the covering pieces to the sheet.

In order to attain a good sealing between consecutive panels or between panels and the rest of the roofing, the panel has, from at least one of the edges of the panel parallel to the steps, a waterproofing sheet or tab partially inserted between the metal sheet and the insulating material layer, which protrudes from said edge in an overlapping strip, being possible that the overlapping strip be part of the body of the metal sheet. Likewise, the metal sheet protrudes, with respect to the insulating material layer and tubes, from at least one of the edges perpendicular to the steps.

The insulating material layer can have fixed on its free surface a coating with any type of finish, for example a wooden one, so that we have a panel with which an integral roofing is attained, which incorporates the interior finish, without needing other finishing operations.

The panel can have, along one or both edges perpendicular to the stepped profile of the metal sheet, gutters for collecting water which rest on a lower support, which can be obtained as an extension of the finish coating of the panel. These gutters also extend through at least one of their ends, beyond the aforementioned support, in a part destined to the overlapping with the gutter of the following panel, thus securing the water tightness between them.

Finally, the panels can have on their outer surface clamps arranged between the slate pieces, to simulate the mounting of a traditional slate tiled roof.

The panel of the invention, with the constitution described, enables its integration in the roofing reducing the system inertia, through the use of slate or other covering pieces with reduced thickness and an absorption sheet, also with reduced thickness.

The use of channels or tubes of reduced diameter, for example less than 16mm, favors fluid agitation and heat transmission, so that high energy efficiency is attained.

Also, in the panel of the invention there is optimum contact between the absorption metal sheet and the covering pieces, since the metal piece has a stepped profile with such dimensions that it simulates the natural overlapping of the covering pieces. Besides, this contact can be improved through the use of a high thermal transmission material arranged between both elements, proportional.

With the panel of the invention it is not necessary to use elements outside the system itself, except for anchoring elements to secure the module or panel to the roofing, avoiding the need to previously redesign the installation, allowing faster mounting. On the other hand, the panel of the invention allows fast mounting of the roofing, at the same time as that of the solar energy collector system, all of which reduces the installation costs.

Another advantage of the panel of the invention is that it allows the total harnessing of the roofing as solar energy collection surface, and all of that without a considerable increase of the mounting edges of the roofing.

The mounting of the panels is performed in a fast and simple manner, since it would only be necessary to have traditional panel anchorages and carry out with the connections of the circuits to said panels.

The coating pieces of the panels can consist of slate pieces or other type of pieces, including metal ones, as long as the covering aspect of the tiled roof is observed.

The slate pieces of the covering can be fixed to the panel through thermal resin, as it was stated above, which optimizes the contact, and also through a mechanic fixing between the slate and the sheet which at no time causes heat dissipation, unlike the case of mounting systems which include battens to which the slate is fixed with nails or clamps which act as heat dissipation means.

The panel of the invention enables to attain any roofing configuration and water heating system arrangement, being possible to place the inlet and outlet at both sides and even the head connection of panels in series, if it is possible according to the dimensions of the tiled roof.

### Brief description of the drawings

The attached drawings show a solar energy collector roofing panel, constituted according to the invention provided as a non-limiting example thereof, where:
Figure 1 is a perspective view of a heater panel built according to the invention.
Figure 2 is an elevation side view of the panel of figure 1.
Figure 3 shows detail A of figure 2, at greater scale.
Figure 4 shows a perspective view of the panel, showing an embodiment variant.
Figure 5 is a partial perspective view of a roofing, formed with the panel of the invention.
Figure 6 shows a lower perspective view of a panel which incorporates a lower finish which will constitute the visible surface of the roofing.
Figures 7, 8 and 9 show schemes of the formation of the inner circuit of the panels.
Figure 10 shows a partial perspective view of a panel constituted according to the invention, with gutter for water collection.
Figure 11 is a side view of the panel of figure 10.

### Detailed description of an embodiment

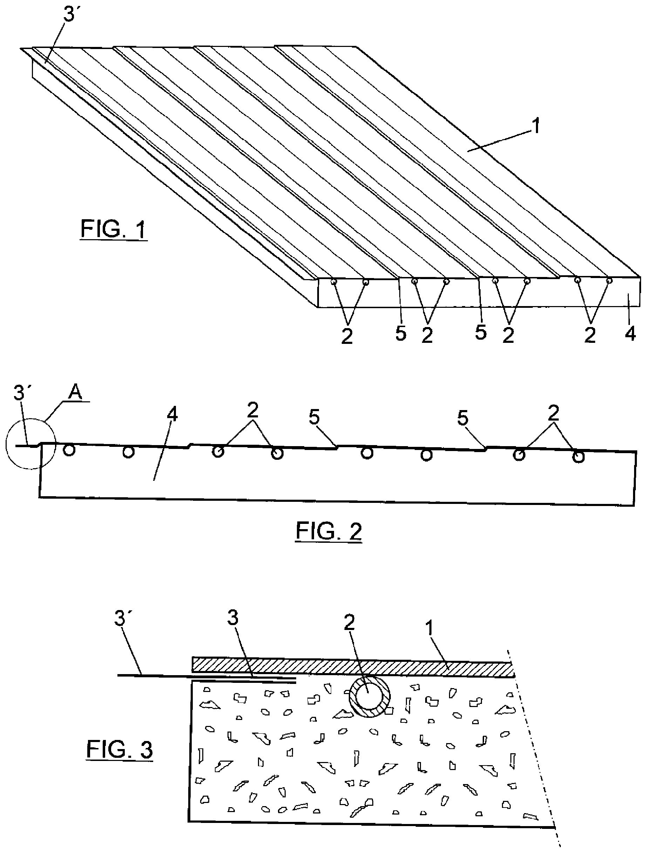

The solar energy collector roofing panel of the invention comprises, as it can be seen in figures 1 to 3, a metal sheet 1, with good thermal transmission coefficient, to one of whose surfaces a series of parallel ducts 2 are fixed, which contact the sheet 1 along the entire length of the ducts, and which are covered by a layer of insulating material 4.

As it can be seen better in figure 3, a waterproofing sheet 3 is inserted between the metal sheet 1 and the insulating material layer 4, said sheet 3 protruding from said edge in a strip 3' which will serve as an overlapping means to secure the water tightness in the coupling between consecutive panels or with the rest of the work.

The tubes 2 can constitute independent pieces of the metal sheet 1, in contact with it, which can be fixed to said sheet, for example through welding, mechanical union, stamping or any other system. The ducts 2 can also form part of the sheet 1, obtained for example with the same extrusion.

As it can be seen better in figure 2, the metal sheet 1 has, in perpendicular direction to the ducts 2, a stepped profile 5 which simulates the natural overlapping of the slate pieces which will preferably constitute the covering pieces. Thus, it is secured a good contact between said slate pieces and the metal sheet 1, contact which can be reinforced and improved through the use of a high thermal transmission material arranged between the sheet and the covering pieces, which also serves as fixing means of the slate pieces on the panels and which can consist of a resin.

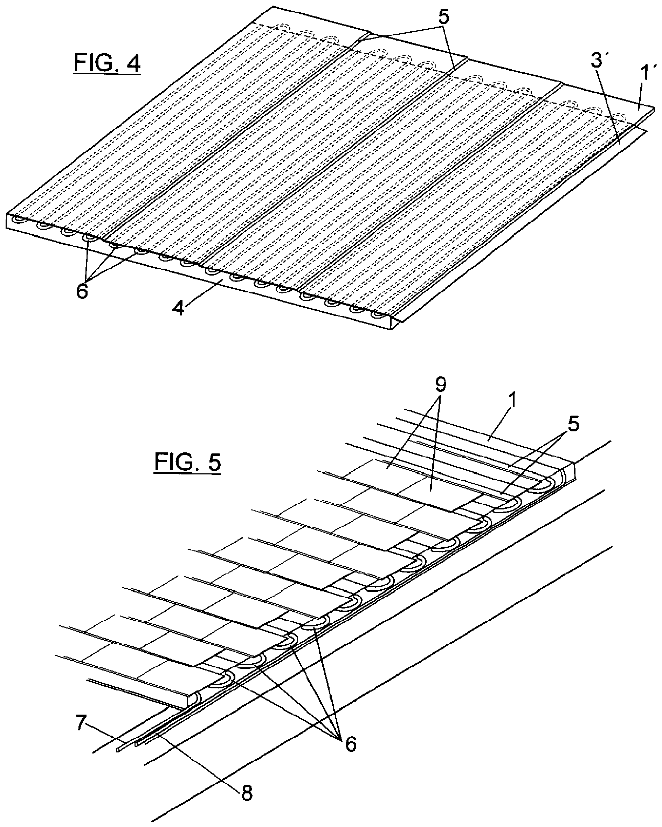

As it can be seen in figure 4, the metal sheet 1 can protrude, with respect to the layer 4 of insulating material and to the tubes 2, from at least one of the edges perpendicular to the steps 5, in a strip 1' which will also serve to facilitate the overlapping between panels and with the rest of the roofing.

The connections between different channels 2 of the same panel, figure 4, and of contiguous panels arranged in series, figure 5, can be performed through pigtails 6 with connectors on their heads. As it can be seen in figure 5, the set of panels arranged in series form a circuit with inlet 7 and outlet 8 from the free end of the end ducts. Figure 5 shows how the slate pieces 9 are arranged on the steps 5 of the metal sheet 1, thus enabling to obtain an external aspect coinciding with that of any roofing with slate pieces.

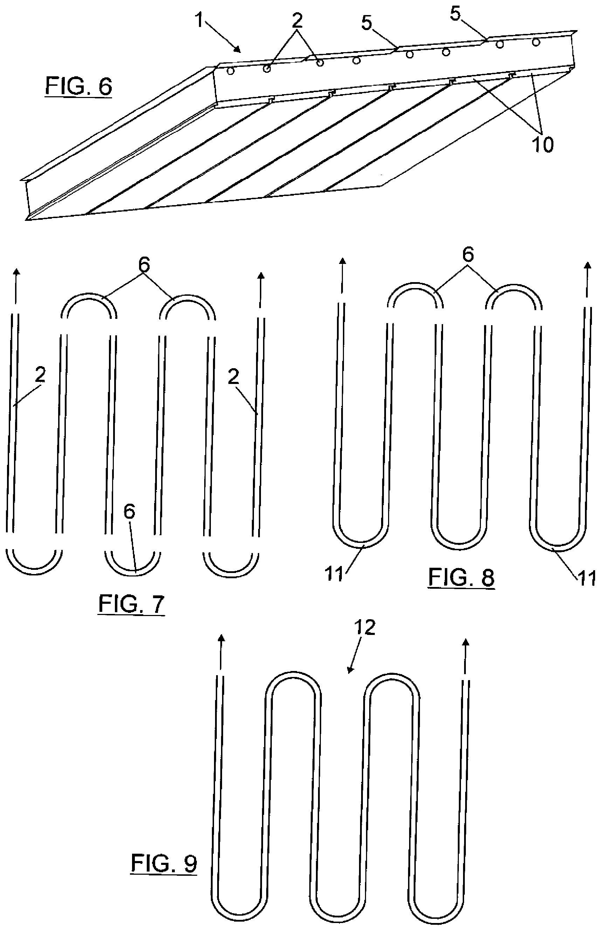

The circuit of each panel can comprise individual tubes 2 connected by means of pigtails 6, figure 7; continuous tubes 7, two by two and pigtails 6, figure 8; or else a continuous coil 12, figure 9.

The panel of the invention can also have on the inner surface a coating which constitutes the visible surface, as shown in figure 6, this coating comprising for example overlapping or tongued and grooved wooden pieces 10, attached and fixed to the free surface of the layer 4 of insulating material, or other type of pieces, thus enabling to attain an integral roofing, with interior finish.

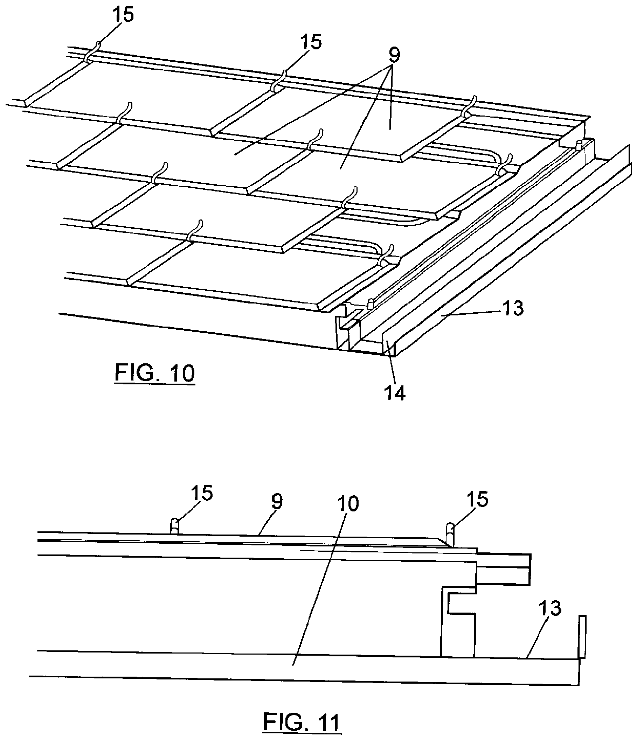

As shown in figures 10 and 11, the panels with the constitution described can have, along one of the edges perpendicular to the stepped profile 5 of the metal sheet 1, a gutter 13 which will enable to obtain the waterproofing of the panel and roofing assembly when it is integrated with the other tiled roof elements.

This gutter 13 is supported by a support 14 which, as shown in figure 11, can be formed by an extension of the coating 10 which will constitute the inner visible surface of the panel.

As it can be seen in figure 10, the gutter 13 extends beyond the support 10 at one end in a section 14 which will serve to facilitate the coupling of successive panels, by overlapping with the gutter of the panel located next to it, ensuring water tightness between them.

In order to simulate the traditional mounting of a slate tiled roof, the panel of the invention can incorporate clamps 15, arranged on the slate pieces 9 in a way similar to the clamps used to fasten the slate pieces in traditional tiled roofs.

With the panel of the invention, it is possible to mount in a fast and simple manner roofings featuring solar energy collector means, which allow the harnessing of the entire surface of the roofing for this purpose, and with which both the interior and exterior finish is attained, without altering the traditional external aspect of the roofing.

## Claims

1. Solar energy collector roofing panel, comprising a metal sheet (1), a series of parallel metal ducts (2) fixed to one of the surfaces of the metal sheet (1); and a layer of insulating material (4) arranged on the metal ducts (2); ducts (2) which are consecutively connected by their adjacent mouths, defining a continuous circuit which is open at the free mouth of the end ducts, for its connection to the circuit of another adjacent panel or to ducts of an external circuit, **characterized in that** the metal sheet (1) has, in perpendicular direction to the metal ducts (2), a stepped profile (5) coinciding with the one formed by slate covering pieces (9) which are coupled on said metal sheet (1), the slate covering pieces (9) being in contact with the metal sheet (1) and fixed to its outer surface by a thermal conductive material; and **in that** the panel includes overlapping means to secure the water tightness in the coupling between consecutive panels.

2. Panel according to claim 1, **characterized in that** the overlapping means include a waterproofing sheet (3) inserted between the metal sheet (1) and the insulating material layer (4), from at least one of the edges of the panel parallel to the steps of the metal sheet (1), which protrudes from said edge in an overlapping strip (3').

3. Panel according to claim 1, **characterized in that** the metal sheet (1) protrudes, with respect to the insulating material layer (4) and ducts (2), from at least one of the edges perpendicular to the stepped profile (5).

4. Panel according to claim 1, **characterized in that** the insulating material layer (4) has, on its free surface, a finish coating (10) fixed thereto.

5. Panel according to any of the preceding claims, **characterized in that** it has along at least one of the edges perpendicular to the stepped profile (5) of the metal sheet (1) a gutter (13) which rests on a lower support.

6. Panel according to claim 5, **characterized in that** the lower support on which the gutter (13) rests is formed by an extension of the finish coating (10) of the panel which constitutes the inner visible surface thereof.

7. Panel according to claim 5, **characterized in that** the aforementioned gutter (13) extends beyond one end of the support on which it is mounted in a section (14) for the overlapping with the gutter of the panel located next to it.

## Patentansprüche

1. Dachplatte eines Solarenergiekollektors, umfassend eine Metallplatte (1), eine Reihe von parallelen Metallleitungen (2), die an einer der Flächen der Metallplatte (1) befestigt sind; und eine Schicht aus isolierendem Material (4), die auf den Metallleitungen (2) aufgetragen ist; Leitungen (2), die hintereinander durch ihre benachbarten Öffnungen verbunden sind, wobei sie einen kontinuierlichen Kreislauf definieren, der an der freien Öffnung der Endleitung offen ist, um eine Verbindung mit dem Kreislauf einer anderen benachbarten Platte oder Leitungen eines externen Kreislaufs zu bilden, **dadurch gekennzeichnet, dass** die Metallplatte (1) in senkrechter Richtung zu den Metallleitungen (2) ein stufenförmiges Profil (5) hat, das mit dem übereinstimmt, das durch Schiefereindeckungsteile (9) gebildet ist, die auf der Metallplatte (1) verbunden sind, wobei die Schiefereindeckungsteile (9) in Kontakt mit der Metallplatte (1) stehen und an ihrer äußeren Fläche durch wärmeleitendes Material befestigt sind; und dadurch, dass die Platte Überlappungsmittel einschließt, um die Wasserdichtigkeit in der Verbindung zwischen aufeinanderfolgenden Platten zu sichern.

2. Platte nach Anspruch 1, **dadurch gekennzeichnet, dass** die Überlappungsmittel eine wasserdichte Platte (3) einschließen, die zwischen der Metallplatte (1) und der Schicht (4) aus isolierendem Material von mindestens einer der Kanten der Platte, die parallel zu den Stufen der Metallplatte (1) sind, eingefügt ist, und die von der Kante mit einem überlappenden Streifen (3') hervorsteht.

3. Platte nach Anspruch 1, **dadurch gekennzeichnet, dass** die Metallplatte (1) bezüglich der Schicht (4) aus isolierendem Material und Leitungen (2) von mindestens einer der Kanten, die senkrecht zu dem stufenförmigen Profil (5) sind, hervorsteht.

4. Platte nach Anspruch 1, **dadurch gekennzeichnet, dass** die Schicht (4) aus isolierendem Material auf ihrer freien Fläche eine daran befestigte Endbeschichtung (10) hat.

5. Platte nach einem der vorhergehenden Ansprüche, **dadurch gekennzeichnet, dass** sie entlang mindestens einer der Kanten, die senkrecht zu dem stufenförmigen Profil (5) der Metallplatte (1) sind, eine Rinne (13) hat, die auf der unteren Halterung aufliegt.

6. Platte nach Anspruch 5, **dadurch gekennzeichnet, dass** die untere Halterung, auf der die Rinne (13) aufliegt, durch eine Erweiterung der Endbeschichtung (10) der Platte gebildet ist, die die innere sichtbare Fläche davon bildet.

7. Platte nach Anspruch 5, **dadurch gekennzeichnet, dass** sich die vorgenannte Rinne (13) über ein Ende der Halterung erstreckt, auf der sie in einem Abschnitt (14) montiert ist, um mit der Rinne der Platte, die sich neben ihr befindet, zu überlappen.

## Revendications

1. Panneau de toiture capteur d'énergie solaire, comprenant une tôle (1), un ensemble de conduits métalliques parallèles (2) fixés aux surfaces de la tôle (1) ; et une couche de matériau isolant (4) disposée sur les conduits métalliques (2) ; conduits (2) qui sont reliés consécutivement par leurs embouchures adjacentes, définissant un circuit continu qui est ouvert à l'embouchure libre des conduits d'extrémité, pour son raccordement au circuit d'un autre panneau adjacent ou aux conduits d'un circuit externe, **caractérisé en ce que** la tôle (1) a, dans un sens perpendiculaire aux conduits métalliques (2), un profilé cranté (5) coïncidant avec celui formé par des pièces de revêtement en ardoise (9) qui sont couplées sur ladite tôle (1), les pièces de revêtement en ardoise (9) étant en contact avec la tôle (1) et fixées à sa surface externe par un matériau conducteur thermique ; et **en ce que** le panneau comporte des moyens de chevauchement pour garantir l'étanchéité dans le couplage entre les panneaux consécutifs.

2. Panneau selon la revendication 1, **caractérisé en ce que** les moyens de chevauchement comportent une plaque imperméable (3) insérée entre la tôle (1) et la couche de matériau isolant (4), depuis au moins l'un des bords du panneau parallèle aux crans de la tôle (1), qui fait saillie dudit bord dans une bande en chevauchement (3').

3. Panneau selon la revendication 1, **caractérisé en ce que** la tôle (1) fait saillie, par rapport à la couche de matériau isolant (4) et aux conduits (2), d'au moins l'un des bords perpendiculaires au profilé cranté (5).

4. Panneau selon la revendication 1, **caractérisé en ce que** la couche de matériau isolant (4) a, sur sa surface libre, un enduit de finition (10) fixé à celle-ci.

5. Panneau selon l'une quelconque des revendications précédentes, **caractérisé en ce qu'**il a le long d'au moins l'un des bords perpendiculaires au profilé cranté (5) de la tôle (1) une gouttière (13) qui s'appuie sur un support inférieur.

6. Panneau selon la revendication 5, **caractérisé en ce que** le support inférieur sur lequel la gouttière (13) se repose est formé d'une extension de l'enduit de finition (10) du panneau qui constitue la surface visible interne de celui-ci.

7. Panneau selon la revendication 5, **caractérisé en ce que** la gouttière susmentionnée (13) s'étend au-delà d'une extrémité du support sur lequel elle est montée dans une section (14) pour le chevauchement avec la gouttière du panneau située à proximité de celui-ci.
